# EUROPEAN PATENT APPLICATION

(11) **EP 1 798 465 A1**
(43) Date of publication of application: **20.06.2007**
(21) Application number: 05027169.1
(22) Date of filing: 13.12.2005
(51) Int. Cl.: F21S 8/10, B60Q 1/44, B60Q 1/26, B60Q 1/54, B60Q 1/52

(54) **Device for remotely signalling the halt of a motor vehicle**

(71) Applicant: Santanera, Bruno, 9908 PD GODLINZE (NL)
(72) Inventor: Santanera, Bruno, 9908 PD GODLINZE (NL)
(74) Representative: Aprà, Mario

(57) **Abstract**

Device for remotely signalling the halt of a motor vehicle, including a starting key block (B) electrically connected in the electric circuit of the motor vehicle (10). Said device includes means (12) with electric lamp for the remote luminous signalling, independent from the means with the lamp for signalling the braking, arranged at least in the rear part of the vehicle and electrically branched in the electric circuit with respect to said starting block (B), so as to signal automatically the halt of the vehicle during running with the switched-on motor and/or during the halt with the switched-off motor.

## Description

The present invention relates to a device for remotely signalling the halt of a motor vehicle.

Means for the luminous signalling of the braking is provided in any motor vehicle. Such luminous signalling means is activated as from the moment wherein the driver operates the brake pedal until he/she releases it and it determines the turning-on of specific electric lamps with red light (brake lights) arranged in the rear part of the vehicle. Nevertheless, the driver of a vehicle is not informed about the real halt of another preceding vehicle, when he/she sees the turned-on lights for signalling the braking of such other vehicle. This drawback can be particularly serious, for example, in case more vehicles are running in sequence one after the other, the so-called "queue", and it can also be the cause for accidents between the vehicles themselves.

Furthermore, the parking of a vehicle under conditions of limited visibility, unless properly signalled, can be the cause of serious accidents.

Starting from knowing such drawbacks, the present invention wishes to solve them.

Therefore, an object of the present invention is to provide a device for the remote signalling which allows to signal, in unequivocal way, the halt of a motor vehicle.

Another object of the invention is to provide a device for the remote signalling which allows signalling, in unequivocal way, that a motor vehicle is going to stop.

Still another object of the invention is to provide a device for the remote signalling which allows signalling the parking of a motor vehicle.

An additional object of the present invention is to provide a device for remotely signalling the halt of a motor vehicle, having a simple structure and a sure and reliable operation.

In view of such purposes, the present invention provides a device for remotely signalling the halt of a motor vehicle, the main feature thereof forms the subject of claim 1.

Additional advantageous features are described in the depending claims.

Said claims are intended to be reported here integrally. The present invention will better result from the following detailed description, by referring to the enclosed drawings, provided only by way of example, wherein:

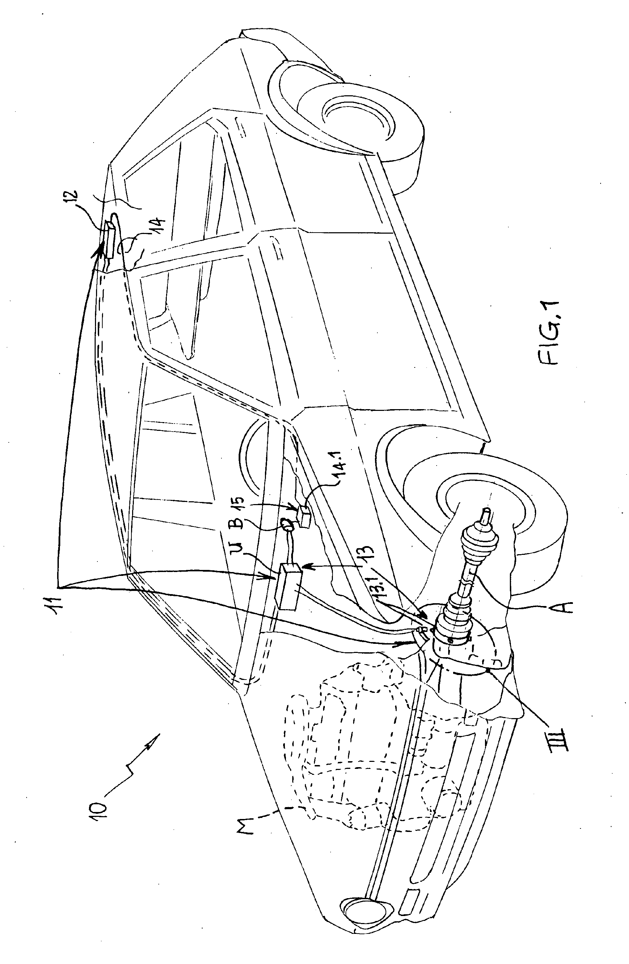

- figure 1 is a schematic front and three-quarter perspective view of a motor vehicle with cutaway parts for illustrating reasons;
- figure 2 is a partial, schematic, rear and three-quarter perspective view of the motor vehicle of figure 1;
- figure 3 is a detailed view in greater scale of the detail of figure 1, with omitted parts for illustrating reasons.

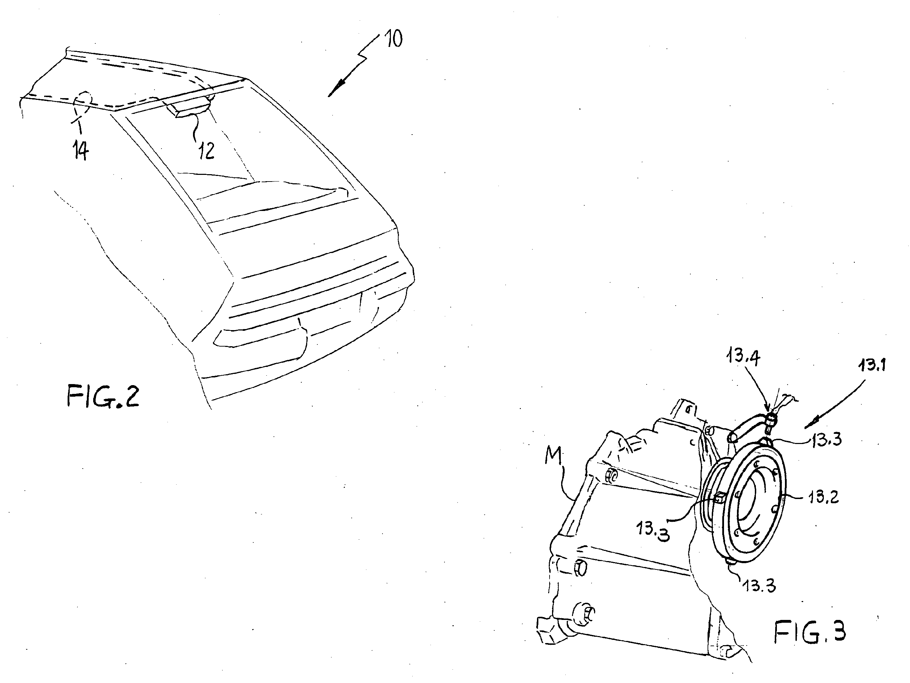

In the drawings, a motor vehicle with front motor M (see also figure 3) is designated as a whole with 10. The starting key block electrically connected in the electric circuit of the motor vehicle 10 is designated with B.

According to the invention, a device 11 for remotely signalling the halt of the vehicle itself is provided in said motor vehicle 10, which device comprises means 12 with electric lamp for the remote luminous signalling, arranged in the rear part of the vehicle, independent from the lights for signalling the braking and electrically branched in electric circuit with respect to said starting block B by means of the electronic means 13 detecting the motion of the motor vehicle 10, so that, when the starting block B is electrically inserted, the signalling lamp of said remote signalling means 12 is power-supplied with electric current and therefore it is turned-on only when the motion-detecting means 13 detects the stationary state of the vehicle 10 itself. It is to be meant that said starting block B is electrically inserted, when the corresponding key is correctly inserted and rotated in the starting position of the vehicle 10. In order to distinguish it from the other signalling lights of the vehicle, said lamp of the signalling means 12 preferably has a yellow or violet light.

According to the illustrated example, said motion-detecting means 13 comprises an electronic counter 13.1 of the revolutions of a drive shaft A of the motor vehicle 10 and processing and calculation electronic means included in an electronic central unit U of the motor vehicle 10.

Said electronic counter 13.1, for example, is of the kind with reed magnetic sensor (see, for example, the US patent 4,025,819 or the US patent 6,628,741) and it comprises a gear 13.2 integral to said drive shaft A at the output of the differential and bearing a plurality of permanent magnets 13.3, as well as at least a reed magnetic sensor 13.4 fastened proximate said gear 13.2. When a magnet 13.3 approaches said magnetic sensor 13.4, it determines a pulse of electric voltage which is useful as output signal of the magnetic sensor itself. Said output signal is applied and processed in said processing and calculation electronic means of the central unit U so as to count the revolution number of the drive shaft A. Said processing and calculation electronic means, when the revolution number of the drive shaft A is equal to 0, determines the electric closure of the circuit branched from the starting block B to said means with remote signalling lamp 12, whereas for any other revolution value it determines the electric opening of the circuit itself.

### Operation:

When the key is inserted and rotated in the starting block B, when the vehicle 10 is not running (revolution number = 0), the electric circuit branched to the remote signalling means 12 is electrically closed and, therefore, the corresponding lamp is turned-on. On the contrary, when the vehicle is running (revolution number ≠ 0), said counter 13.1 determines, by means of said central unit U, the electric opening of said circuit and therefore the lamp of the remote signalling means 12 is turned-off. Every time the revolution number of the drive shaft A is brought to 0, said lamp is turned-on.

According to an embodiment variant of the invention, electric/electronic means with intermittent switch (known on itself and not illustrated) is further branched in said electric circuit, which is electrically activated, by means of said central unit U, when the electronic counter 13.1 counts a relatively small revolution number of the drive shaft A and which is proximate 0, so as to make the electric lamp of said remote signalling means 12 to turn on and turn off in an intermittent way. Once the stationary state of the vehicle has been reached, said lamp remains turned-on. The intermittent turning-on and turning-off frequency of said lamp can be adjusted so as to increase upon decreasing the number of revolutions counted by said counter 13.1 and thus upon decreasing the speed of the vehicle 10. Such arrangement allows to modulate the luminous signal emitted by the signalling means 12, so as to warn the drivers of the surrounding vehicles that the vehicle 10 is going to stop.

Furthermore, another electric circuit for power-supplying the means with lamp 12 of the remote signalling device 11, designated with 14, is branched from the starting block B and which, when the starting key is rotated in the electric disconnection position in the block B, puts said lamp 12 in electric connection with the electric power supply battery of the vehicle. In this way, upon switching-off the motor M, the lamp 12 of the remote signalling device 11 automatically turns-on. Timing means 14.1 are electrically connected in said circuit 14 which means, once a determined delay time has elapsed (for example, 10 - 15 minutes), electrically opens the circuit itself, by determining the turning-off of said lamp 12.

A manual switch 15, preferably a switch with a luminous push button, is further connected in said electric circuit 14, so as to deactivate, when inserted, said timing means 14.1 so as to keep the electric lamp 12 of said remote signalling device 11 turned-on indefinitively. When the starting key is inserted again in the block B and then rotated in the starting position, said electric circuit 14 is electrically opened.

Furthermore, means with emergency electric battery (known on ifself and not illustrated) is connected in said electric circuit 14, which however guarantees the operation of the signalling device 11.

Obviously, means for detecting the motion of the vehicle 10 different from the ones here illustrated and described, and known on itself, can be used. Such means can be substantially detectors of the motion of a part of the vehicle (for example drive shaft A), which is moving only when the vehicle is running, or detectors of the relative motion of the vehicle itself with respect to the outer environment, such as for example means with closed-circuit camera, whose lens is oriented towards the route run by the vehicle.

Obviously, the device according to the invention can be applied also to means pulled by motor vehicles, such as trailers, caravans and the like.

As it results from what said previously, the present invention allows achieving the proposed objects in a simple and advantageous way.

## Claims

1. Device for remotely signalling the halt of a motor vehicle, including a starting key block (B) electrically connected in the electric circuit of the motor vehicle (10), **characterized in that** it comprises means (12) with electric lamp for the remote luminous signalling, independent from the means with the lamp for signalling the braking, arranged at least in the rear part of the vehicle and electrically branched in electric circuit with respect to said starting block (B), so as to signal automatically the halt of the vehicle during the running with switched-on motor and/or during the halt with switched-off motor.

2. Device according to claim 1, **characterized in that** said means with electric lamp (12) for the remote luminous signalling is electrically branched in electric circuit with respect to said starting block (B) by means of electronic means (13) detecting the motion of the motor vehicle (10), so that, when said starting block (B) is electrically inserted, at least a signalling lamp of said remote signalling means (12) is power-supplied with electric current and turned-on only when said means for detecting the motion (13) detects the stationary state of the vehicle (10) itself.

3. Device according to claim 2, **characterized in that** it comprises means (13) for detecting the motion of a part (A) of the vehicle, which is moving only when the vehicle is running.

4. Device according to claim 2, **characterized in that** it comprises means for detecting the relative motion of the vehicle with respect to the outer environment, such as for example means with closed-circuit camera, whose lens is oriented towards the route run by the vehicle.

5. Device according to claim 3, **characterized in that** said means for detecting the motion (13) comprises an electric counter (13.1.) of the revolutions of a part (A) of the vehicle (10) and processing and calculation electronic means included in an electronic central unit (U) of the vehicle (10).

6. Device according to claim 5, **characterized in that** said electronic counter (13), when it detects the rotation of said part (A) of the vehicle (10), generates an output signal which is applied and processed in said processing and calculation electronic means of the central unit (U), so that when the revolution number of said part (A) is equal to zero, or it is proximate zero, it determines the electric closure of the circuit branched from the starting block (B) to said remote signalling means (12), whereas for any other revolution value it determines the electric opening of the circuit itself.

7. Device according to one or more of the preceding claims, **characterized in that** electric/electronic means with intermittent switch is branched in said electric circuit between said starting block (B) and said means for the remote luminous signalling (12), which makes said at least a lamp of said remote signalling means (12) to turn on and turn off in an intermittent way, before the vehicle stops, whereas, after having reached the stationary state of the vehicle, said lamp remains turned-on.

8. Device according to claim 7, **characterized in that** the intermittent turning-on and turning-off frequency of said at least a lamp of said remote signalling means (12) is adjusted so as to increase upon decreasing the speed of the vehicle (10).

9. Device according to one or more of the preceding claims, **characterized in that** said remote signalling means (12) comprises at least a lamp with yellow or violet light.

10. Device according to claim 1, **characterized in that** an electric circuit (14) for power-supplying said at least a lamp of said remote signalling means (12) is branched from said starting block (B), which circuit, when the starting key inserted in the block (B) is rotated in the electric disconnection position, puts said lamp in electric connection with the electric power supply battery of the motor vehicle, so that upon switching off the motor (M), the lamp itself automatically is turned-on.

11. Device according to claim 10, **characterized in that** timing means (14.1) is electrically connected in said circuit (14), which, once a determined delay time has elapsed, opens electrically the circuit itself, by determining the turning-off of said at least a lamp.

12. Device according to claim 11, **characterized in that** it comprises a manual switch (15), preferably with a luminous push button, connected in said electric circuit (14), so as to keep said at least a lamp turned-on, until the starting key is inserted again in the block (B) and then rotated in the starting position.

13. Device according to one or more of the preceding claims, **characterized in that** it comprises emergency electric battery means, which however guarantees the operation of the signalling device (11) itself.

14. Device according to one or more of the preceding claims, **characterized in that** it is used in a vehicle pulled by a motor vehicle.
